# EUROPEAN PATENT SPECIFICATION

(11) **EP 1 752 351 B1**
(45) Date of publication and mention of the grant of the patent: **08.04.2009**
(21) Application number: 06016671.7
(22) Date of filing: 09.08.2006
(51) Int. Cl.: B60T 13/74, B60T 17/22, B60T 8/88

(54) **Electric brake and electric brake control apparatus**
Elektrische Bremse und Bremsregelvorrichtung
Frein électrique et système de réglage de freins

(30) Priority: 09.08.2005 JP 2005230239
(43) Date of publication of application: 14.02.2007
(73) Proprietor: Hitachi, Ltd., Chiyoda-ku Tokyo 100-8280 (JP)
(72) Inventor: Suzuki, Takafumi c/o Hitachi, Ltd., Intellectual Property Group, Chiyoda-ku, Tokyo 100-8280 (JP)
(74) Representative: Beetz & Partner

(56) References cited:
- EP-A1- 0 486 281
- GB-A- 2 316 726
- US-A1- 2004 154 884
- US-B1- 6 203 120
- US-B1- 6 416 140

## Description

### BACKGROUND OF THE INVENTION

This invention relates to an electric brake and an electric brake control apparatus, or in particular to the operation at the time of occurrence of a trouble thereof.

A conventional technique has been developed to provide a highly safe automotive vehicle equipped with what is called an electric brake having a control unit for electrically controlling the vehicle brake as required without regard to the manual operation of the driver.

In the case where a trouble occurs in the electrical system of such a brake, however, the braking force may be reduced. A technique is known to maintain the braking force for the vehicle as a whole by switching the brake system even in the case where the brake partially develops a trouble (see, for example, JP-A-2001-158336 corresponding to U.S. Patent No. 6,416,140).

The aforementioned technique is intended to reduce the braking force or the degree of change of the braking force of the electric brake unit for a specific one of the normal wheels other than the faulty electric brake in accordance with the maneuverability and the running condition of the vehicle.

The conventional technique poses the problem that the braking force of the normal electric brakes other than the faulty one is reduced and therefore the braking force of the vehicle as a whole decreases.

The document EP 0486281 A1 relates to a motor vehicle brake system with a fail-safe mechanism.

Document EP-A-0 486 281 discloses:
An electric brake control apparatus comprising:
   a detector for detecting a faulty
   component part among a plurality of predetermined
   component parts of an electric brake system;
   a determining unit for determining whether the braking force generating function of the electric brake system is maintained or stopped, in accordance with the type of the component part detected by the detector; and
   a control unit for stopping the operation of the electric brake system upon determination by the determining unit that the braking force generating function is stopped and
   maintaining the braking force generating function of the electric brake system using other component parts than the one detected by the detector upon determination by the determining unit that the braking force generating function is maintained.

The document teaches to control a plurality of braking force generating mechanisms associated with respective wheels of a vehicle. In the event of a failure of at least one of the braking force generating mechanisms, the braking force of the remaining braking force generating mechanisms is boosted. The remaining braking force generating mechanisms are selected and operated based on the failure signal according to a predetermined rule.

### SUMMARY OF THE INVENTION

Accordingly, it is an object of this invention to provide an electric brake and an electric brake control apparatus which obviate the problem of the prior art described above.

Another object of this invention is to provide an electric brake and an electric brake control apparatus which can secure the required braking force as far as possible even at the time of a trouble of the electric brake.

According to one aspect of the invention, there is provided an electric brake and an electric brake control apparatus in which the function of generating the braking force of the electric brake is maintained by the normal component parts other than those of the electric brake in trouble.

According to another aspect of the invention, there is provided an electric brake and an electric brake control apparatus which determines whether the function of generating the braking force is maintained or deactivated depending on the internal and external conditions of the vehicle.

According to this invention, the required braking force can be secured as far as possible even in the case of a trouble of the electric brake.

Other objects, features and advantages of the invention will become apparent from the following description of the embodiments of the invention taken in conjunction with the accompanying drawings.

### BRIEF DESCRIPTION OF THE DRAWINGS

Fig. 1 is a diagram showing a configuration of an electric brake system according to an embodiment of the invention.
Fig. 2 shows the state of the electric brake system upon occurrence of a trouble in the configuration shown in Fig. 1.
Fig. 3 shows the state of the electric brake system upon occurrence of a trouble in the configuration shown in Fig. 1.
Fig. 4 shows the electric brake system of Fig. 1 system further including an environmental information detection unit 31, a brake pedal angle detection unit 32 and a vehicle condition detection unit 33.
Fig. 5 is a state transition diagram showing the operation of switching the mode in accordance with a brake request 501 in Fig. 3.
Fig. 6 is a state transition diagram showing the operation of switching the mode in accordance with a running condition 601 in Fig. 3.
Fig. 7 is a state transition diagram showing the operation of switching the mode in accordance with a vehicle condition 701 in Fig. 3.
Fig. 8 is a flowchart of a software program for state transition carried out by a control means 13 shown in Fig. 1.
Fig. 9 shows the electric brake system shown in Fig. 3 further including an alarm unit 91.
Fig. 10 shows an example of the method of turning on the warning lamp of an alarm unit shown in Fig. 9.
Fig. 11 shows a configuration for normal control operation according to the embodiment shown in Fig. 1.
Fig. 12 shows a configuration for the control operation performed upon occurrence of a trouble in a current sensor 15 in Fig. 11.
Fig. 13 shows a conduction pattern for 120° conduction control in Fig. 12.
Fig. 14 shows a configuration for the control operation performed upon occurrence of a trouble in a propulsive force sensor in Fig. 11.
Fig. 15 shows a configuration for the control operation performed upon occurrence of a trouble in a rotation angle sensor in Fig. 11.

### DETAILED DESCRIPTION OF THE INVENTION

Embodiments of the invention are described below.

These embodiments concern a brake system or especially, a method and an apparatus for an electric brake system in which the motor torque is converted into a linear motion through a rotary-to-linear motion conversion mechanism and a pad is pressed against the rotor to generate the braking force upon occurrence of a trouble in the electric brake system.

According to the embodiments, a control system for reducing a braking force to zero and a control system for generating a braking force are selectively used upon occurrence of a trouble in the electric brake system. As an alternative, two control systems having different braking forces are selectively used in such a case.

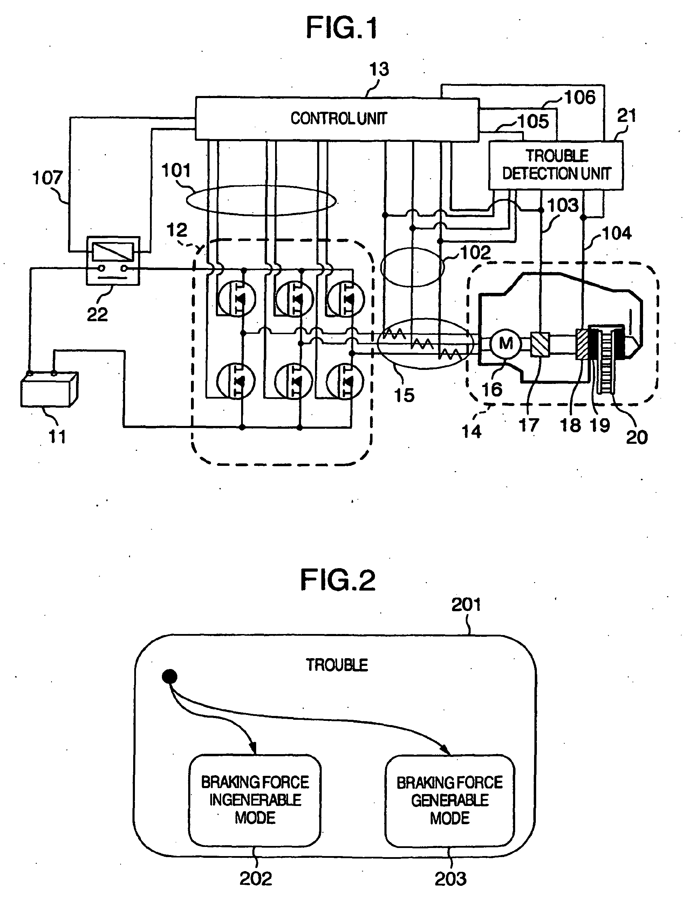

Fig. 1 is a diagram showing a configuration of an electric brake system according to an embodiment of the invention. All the component parts described in Fig. 1 are not necessarily included in the system.

A braking unit 14 generates a braking force by pressing a braking member 19 against a rotary unit 20 integrally rotated with a vehicle wheel. According to this embodiment, a motor 16 is used as an actuator for driving the braking member 19 of the braking unit 14. This braking unit is mounted on each or a part of the vehicle wheels.

In Fig. 1, a vehicle battery 11 generates a sufficient voltage to drive the electric brake system and suitably constitutes a power supply system of 12 V or 36 V.

A drive circuit 12 is an inverter or a H bridge circuit, for example, which is driven by the PWM wave such as a motor drive signal 101 from the control unit 13 and outputs a voltage for controlling the rotation of the motor 16. The embodiment shown in Fig. 1 includes an inverter circuit for driving a three-phase motor used for PWM control operation.

The control unit 13 outputs a motor drive signal 101 to control the braking force of the electric brake system and the motor 16 of the braking unit 14, which output constitutes a command signal 105 as an estimated value of the prevailing state of the braking unit 14. The command signal 105 represents, for example, the rotation angle, the angular velocity, the angular acceleration and the current of the motor 16 and the propulsive force of the breaking member 19. Also, the braking force of the electric brake system is controlled by a plurality of control systems adapted to be switched for control operation at the time of occurrence of a trouble in the electric brake system.

The braking unit 14 uses the motor 16 as an actuator and generates the vehicle braking force by pressing the braking member 19 against the rotary unit 20. The braking unit 14 has a fail-open structure, and generates no braking force for the vehicle as long as the torque is not generated in the motor 16.

The motor 16 is a three-phase DC brushless motor, a DC motor or an AC motor.

The rotation angle sensor 17 is a resolver or a Hall element, for example, to detect the rotation amount of the motor 16 and output a rotation angle signal 103 to the control unit 13 and a trouble detection unit 21. The rotation angle signal 103 is an analog signal, a rectangular wave signal or a time-multiplexed communication signal.

The propulsive force sensor 18 is a distortion gauge or a piezoelectric element, for example, and detects the propulsive force for pressing the braking member 19 of the braking unit 14 against the rotary unit 20. The propulsive force sensor 18 thus outputs the propulsive force signal 104 to the control unit 13 or the trouble detection unit 21. The propulsive force signal 104 is an analog signal, a rectangular wave signal or a time-multiplexed communication signal.

The braking member 19 is a brake pad, for example, and the rotary unit 20 is a brake disk, for example

A current sensor 15 is a Hall-type current sensor, a servo-type DC current sensor or a shunt resistor, for example, and interposed between the motor 16 and the drive circuit 12 for detecting the current flowing in each phase of the motor 16. The current sensor 15 thus outputs a motor current signal 102 to the control unit 13 and the trouble detection unit 21. The motor current signal 102 is an analog signal, a rectangular wave signal or a time-multiplexed communication signal.

The trouble detection unit 21 monitors the motor current signal 102, the rotation angle signal 103, the propulsive force signal 104 or the command signal 105, detects the trouble of the drive circuit 12, the current sensor 15, the rotation angle sensor 17 and the propulsive force sensor 18, and outputs a trouble detection signal 106. In the case where the rotation angle signal 103 deviates from the estimated value of the rotation angle of the command signal 105 by at least a threshold value, for example, a trouble in the rotation angle sensor 17 is determined. The trouble detection signal 106 is an analog signal, a rectangular wave signal or a time-multiplexed communication signal.

A relay 22 is interposed between the battery 11 and the drive circuit 12 to switch the power supplied to the drive circuit 12. The control unit 13 controls the relay 22 with a relay operation signal 107. Once the relay operation signal 107 turns off, the relay 22 turns off, and power ceases to be supplied to the drive circuit 12, so that the motor 16 generates no torque any longer. As a result, the braking unit 14 ceases to generate the braking force.

Fig. 2 shows the state of the electric brake system at the time of a trouble or abnormality in the configuration shown in Fig. 1.

In Fig. 2, a trouble mode 201 is a state in which a trouble is detected by the trouble detection unit 21 and the trouble detection signal 106 is output or a state in which the control unit detects that the trouble detection signal 106 is output and a trouble control operation is started.

In trouble mode 201, the electric brake system is either in a braking force ingenerable mode 202 (braking force stop mode) or a braking force generable mode 203 (braking force generation mode). The braking force ingenerable mode 202 is a state in which the braking member 19 and the rotary unit 20 are separated from each other to such an extent that no braking force is generated, or a state in which the braking member 19 and the rotary unit 20, though in contact with each other, applies no deceleration force to the vehicle. The braking force ingenerable mode 202 is realized, for example, by turning off the relay 22 or by controlling the motor 16 in accordance with the propulsive force signal 104 or the rotation angle signal 103. The braking force generable mode 203, on the other hand, is a state in which the control unit 13 generates a braking force using a replacement control system. At the time of starting the trouble mode 201, the state to which the vehicle operation is switched is determined in accordance with the vehicle running condition, the brake request from the driver or the vehicle condition.

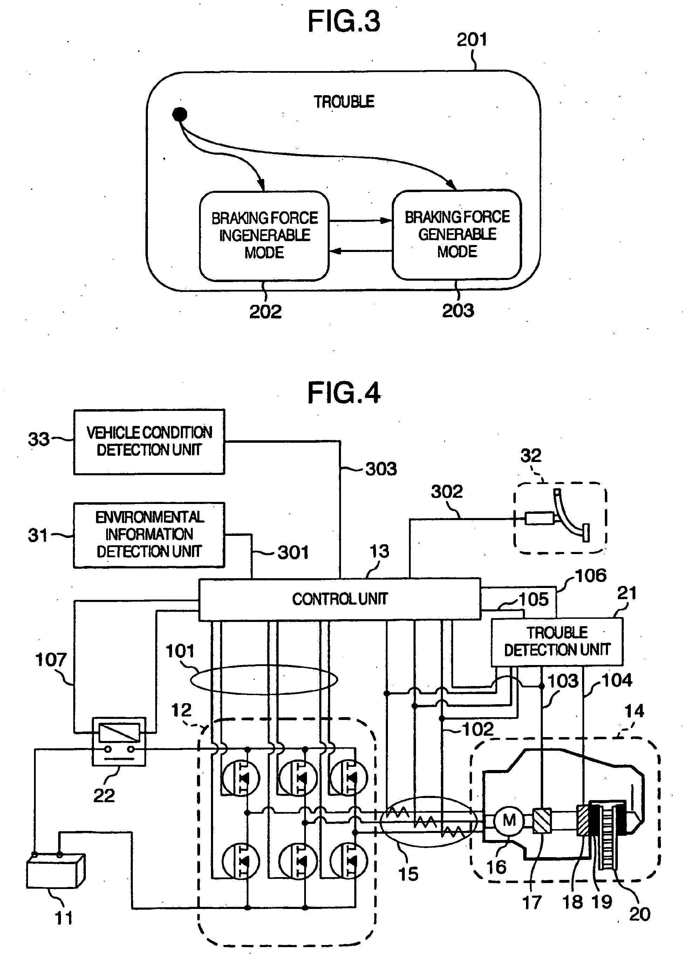

Fig. 3 is a state of the electric brake system at the time of a trouble in the configuration of Fig. 1. The braking force ingenerable mode 202 and the braking force generable mode 203 can be switched to each other.

Fig. 4 shows an electric brake system constituting the electric brake system of Fig. 1 further including an environmental information detection unit 31, a brake pedal angle detection unit 32 and a vehicle condition detection unit 33.

The environmental information detection unit 31 is a milliwave radar, a laser radar, a raindrop sensor or a navigation system, for example, to acquire the information on any obstacle ahead or behind the vehicle and the information on the running environment and transmit an environmental information signal 301.

The brake pedal angle detection unit 32 is a pedal stroke simulator or a jointstick, for example, and converts the angle of the brake pedal depressed by the driver into a brake pedal angle signal 302.

The vehicle condition detection unit 33 is a yaw rate sensor or a wheel speed sensor, for example, to detect the speed and direction of the vehicle and outputs a vehicle condition signal 303.

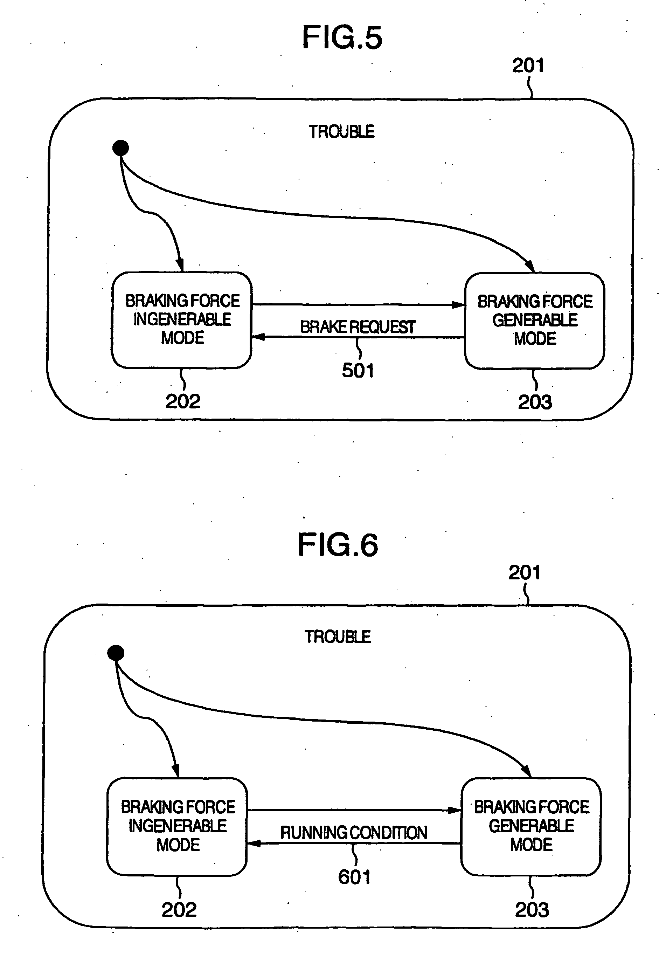

Fig. 5 shows a state transition diagram for switching the state in Fig. 3 in accordance with the brake request 501.

The brake request 501 is received from the driver. In the case where the driver depresses the brake pedal to to an angle not less than the threshold value of the brake pedal angle detection unit 32, the braking force ingenerable mode 202 is switched to the braking force generable mode 203. In the case where the driver depresses the brake pedal to an angle not more than the threshold value of the brake pedal angle detection unit 32, on the other hand, the braking force generable mode 203 is switched to the braking force ingenerable mode 202. As an alternative, in the case where the brake is operated so sharply that the change amount of the brake pedal angle detected by the brake pedal angle detection unit 32 reaches or exceeds the threshold value, the braking force ingenerable mode 202 may be switched to the braking force generable mode 203 or the braking force generable mode 203 to the braking force ingenerable mode 202.

As another alternative, the mode may be switched in the case of an operation in such a specific pattern that the brake pedal angle detection unit 32 continuously operates.

Fig. 6 shows the state transition for switching the mode in Fig. 3 in accordance with the running condition 601.

The running condition 601 is acquired from the environmental information detection unit 31. In the case where an obstacle is detected ahead of the vehicle by radar, for example, the braking force ingenerable mode 202 is switched to the braking force generable mode 203, while in the case where no obstacle is detected ahead of the vehicle, on the other hand, the braking force generable mode 203 is switched to the braking force ingenerable mode 202. As an alternative, upon determination by a navigation system that a descending slope or a sharply curved road exists ahead, the braking force ingenerable mode 202 is switched to the braking force generable mode 202, while in the case where the navigation system determines the road ahead as straight, on the other hand, the braking force generable mode 203 is switched to the braking force ingenerable mode 202. As another alternative, in the case where the raindrop detection sensor determines a rainfall, the braking force ingenerable mode 202 is switched to the braking force generable mode 203.

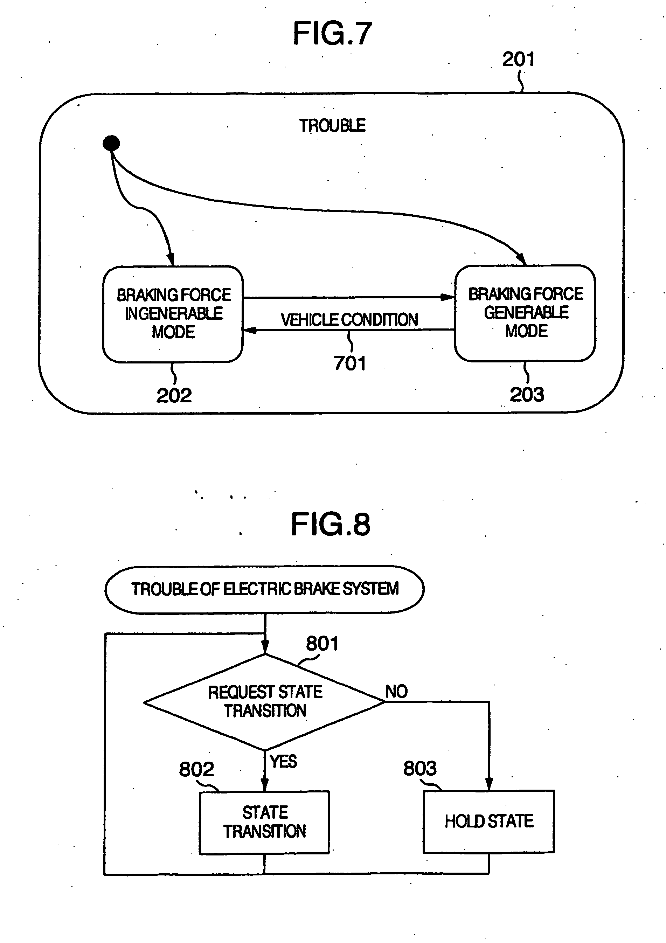

Fig. 7 is a state transition diagram for switching the mode in Fig. 3 in accordance with the vehicle condition 701.

The vehicle condition 701 is acquired from the vehicle condition detection unit 33. In the case where a vehicle skid is detected as the result of switching the electric brake system to the braking force generable mode 203, for example, the braking force ingenerable mode 202 is restored. As an alternative, in the case where the vehicle speed is at or higher than a threshold value, the braking force ingenerable mode 202 is switched to the braking force generable mode 203.

Fig. 8 is a flowchart showing the software program for state transition by the control unit 13 shown in Fig. 1. The process of Fig. 8 is executed upon occurrence of a trouble of the electric brake system. In step 801, the brake request 501, the running condition 601 or the vehicle condition 801 for state transition is diagnosed, and in the case where the state transition is required, the process proceeds to step 802 to transfer the state, while in the case where no state transition is required, on the other hand, the process proceeds to step 803 to hold the present running condition.

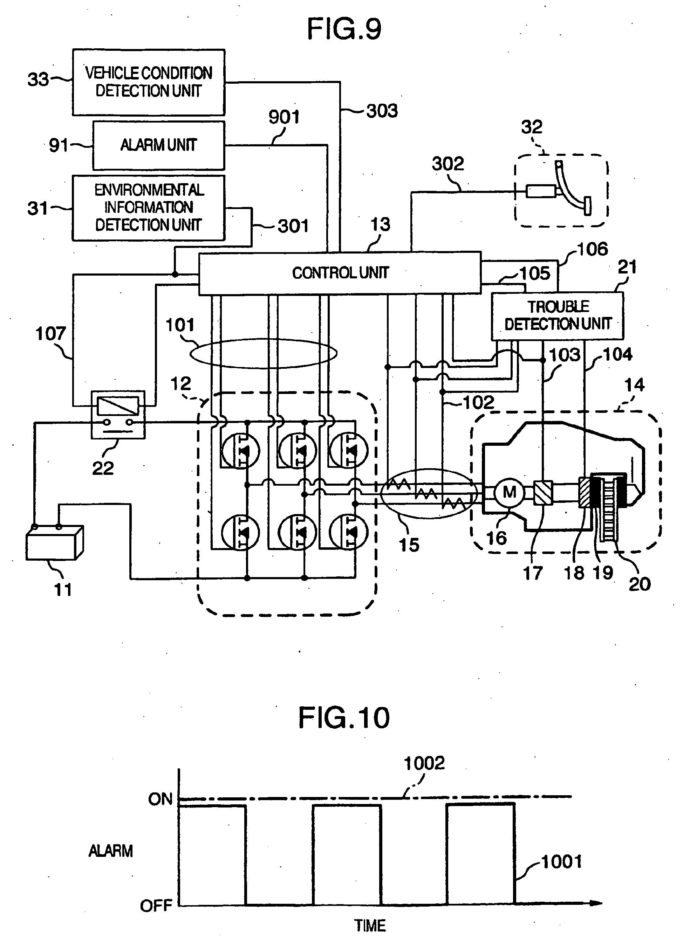

Fig. 9 shows the electric brake system of Fig. 3 further including an alarm unit 91.

The alarm unit 91 is used to notify the driver of the state of the electric brake system in case of a trouble, and is formed of a lamp, an alarm or a liquid crystal screen. The alarm unit 91 is driven by an alarm unit drive signal 901 output from the control unit 13, and selectively uses a plurality of alarm methods in accordance with the alarm unit drive signal 901.

The alarm unit 91, for example, uses different alarm methods for the braking force ingenerable mode 202 and the braking force generable mode 203. The method of turning on the warning lamp, the color of the warning lamp, the frequency, pattern and tone of the alarm sound, the vibration pattern of the steering wheel and pedals, the display on the liquid crystal screen and audio alarm are some of

### examples.

Fig. 10 shows an example of the method of turning on the warning lamp of the alarm unit shown in Fig. 9. In the braking force ingenerable mode 202, the warning lamp is periodically blinked as in the lighting method 1001 while in the braking force generable mode 203, the warning lamp is kept on as in the lighting method 1002.

Next, a method of selecting the control method of the control unit 13 upon detection of a trouble by the trouble detection unit 21 is explained.

Table 1 is a state transition table used at the time of occurrence of a trouble of the electric brake system.

**[Table 1]**

| Point of trouble | Obstacle ahead | Brake request | Alarm method | Brake control method |
|---|---|---|---|---|
| Normal | Absent | Absent | Absent | Normal control |
| | | Present | Absent | Normal control |
| | Present | Absent | Absent | Normal control |
| | | Present | Absent | Normal control |
| Current sensor | Absent | Absent | Trouble alarm 1 | Stop |
| | | Present | Trouble alarm 2 | Current estimation control |
| | Present | Absent | Trouble alarm 2 | Current estimation control |
| | | Present | Trouble alarm 2 | Current estimation control |
| Rotation angle sensor | Absent | Absent | Trouble alarm 1 | Stop |
| | | Present | Trouble alarm 1 | Stop |
| | Present | Absent | Trouble alarm 2 | Sensorless control |
| | | Present | Trouble alarm 2 | Sensorless control |
| Propulsive force sensor | Absent | Absent | Trouble alarm 1 | Stop |
| | | Present | Trouble alarm 2 | Position control |
| | Present | Absent | Trouble alarm 2 | Position control |
| | | Present | Trouble alarm 2 | Position control |

In accordance with the presence or absence of an obstacle ahead based on the trouble detection signal 106 or the environmental information signal 301 or the presence or absence of a brake request from the driver based on the brake operation signal 302, the alarm method of the alarm unit 91 and the brake control method of the control unit 13 are selected.

Upon determination that the electric brake system is normal based on the trouble detection signal 106, no trouble alarm is issued and the normal brake control operation is carried out without regard to the environmental information signal 301 and the brake operation signal 302.

In the case where a trouble of the current sensor 15 is detected based on the trouble detection signal 106, the trouble alarm and the control method (current sensor trouble mode) is selected in accordance with the environmental information signal 301 and the brake operation signal 302. As long as the driver is not performing the braking operation in the absence of an obstacle ahead and hence in the absence of the risk of hitting any object, the control operation is stopped and the trouble alarm 1 is issued. In other cases, the current is estimated from the propulsive force signal 104 and the rotation angle signal 103 thereby to issue the trouble alarm 2.

Upon detection that the rotation angle sensor 17 has a trouble based on the trouble detection signal 106, the trouble alarm and the control method (rotation angle sensor trouble mode) are selected in accordance with the environmental information signal 301. As long as there is no risk of hitting any object in the absence of an obstacle ahead, the control operation is stopped, and the trouble alarm 1 is issued. In the presence of an obstacle ahead, on the other hand, the rotation angle is estimated form the motor current signal 102 and the sensorless control operation is performed thereby to issue the trouble alarm 2.

Upon detection that the propulsive force sensor 24 has a trouble based on the trouble detection signal 106, the trouble alarm and the control method (propulsive force sensor trouble mode) are selected in accordance with the environmental information signal 301 and the brake operation signal 302. As long as there is no risk of hitting an object in the absence of an obstacle ahead and the driver is not performing the braking operation, the control operation is stopped and the trouble alarm 1 is issued. In other cases, the propulsive force is estimated from the rotation angle signal to control the position and the trouble alarm 2 is issued.

In this way, the operation mode of the electric brake system is changed in accordance with the type of the faulty component parts.

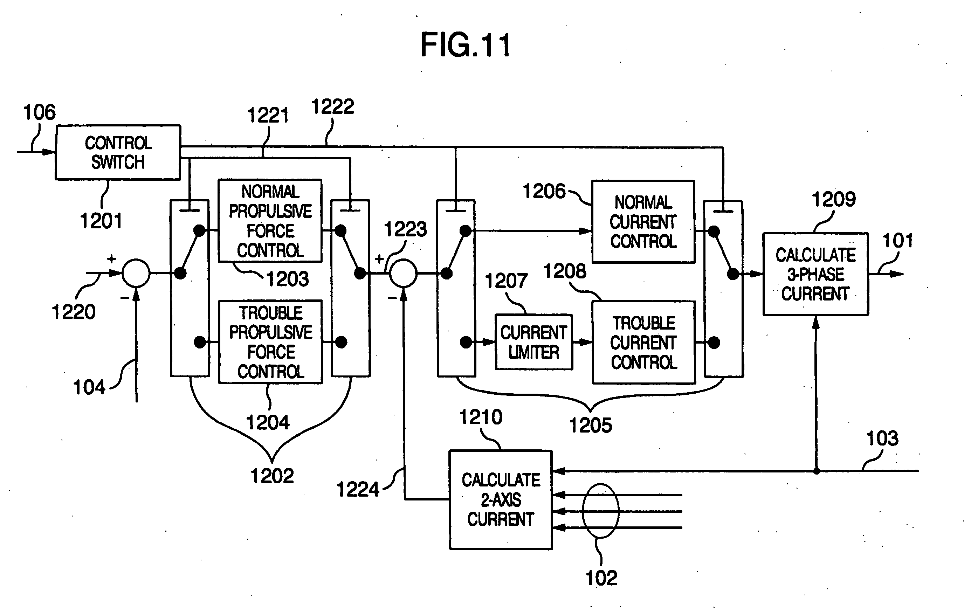

Fig. 11 shows a configuration for control operation under normal conditions according to the embodiment shown in Fig. 1.

The propulsive force command 1220 represents a command value of the propulsive force for pressing the braking member 19 against the rotary unit 20 in response to the brake request of the driver.

The control switch 1201 determines the operation of switching the propulsive force controller and the current controller in accordance with the trouble detection signal 106, and outputs a propulsive force controller switch signal 1221 and a current controller switch signal 1222.

The propulsive force control switch 1202 selects the normal propulsive force controller 1203 and the trouble propulsive force controller 1204 in accordance with the propulsive force controller switch signal 1221. Under normal conditions, the normal propulsive force controller 1203 is selected.

The normal propulsive force controller 1203 and the trouble propulsive force controller 1204 are each a PI controller, for example, and process the difference between the propulsive force command 1220 and the actual propulsive force 104. The difference between the normal propulsive force controller 1203 and the trouble propulsive force controller 1204 is determined in the form of a different gain, the addition of a limiter or the employment of the PID control.

The normal propulsive force controller 1203 and the trouble propulsive force controller 1204 output a current command signal 1223, and the difference between the current command signal 1223 and the actual current signal 1224 is input to the current controller.

The actual current signal 1224 is calculated from the motor current signal 102 and the rotation angle signal 103.

The current control switch 1205 selects the normal current controller 1206, the current limiter 1207 or the trouble current controller 1208 in accordance with the current control switch signal 1222. Under normal conditions, the normal current controller 1206 is selected.

The normal current controller 1206 and the trouble current controller 1208 are each a PI controller, for example.

The difference between the normal current controller 1206 and the trouble current controller 1208 is determined in the form of a different gain, the addition of a limiter or the employment of the PID control.

The three-phase current calculation process 1209 calculates the motor drive signal 101 from the output of the current controller and the rotation angle signal 103.

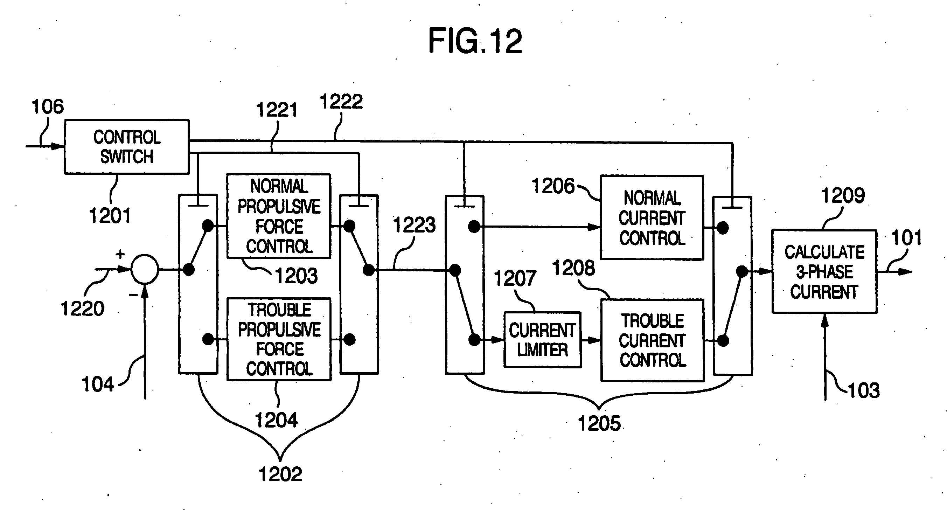

Fig. 12 shows a configuration for control operation upon occurrence of a trouble in the current sensor 15 in Fig. 11.

In the current control operation, an open-loop control system is employed without the motor current signal 102. The current limiter 1207 and the trouble current controller 1208 are selected by the current control switch 1205.

In the process, the trouble current controller 1208 may be controlled either vectorially or by 120° or 180° conduction control.

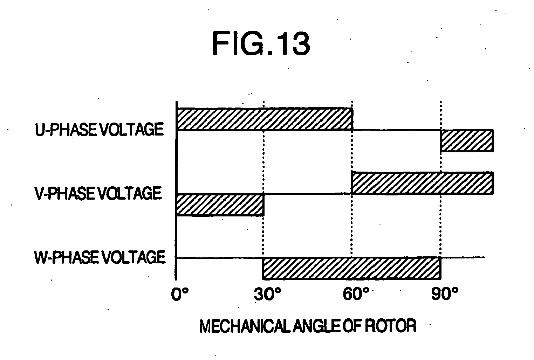

Fig. 13 shows a conduction pattern for the 120° conduction control in Fig. 12.

In the 120° conduction control, the phase of current supply phase is switched for every 30° in rotation angle, and therefore the current continues to flow in a specified phase within the motor rotation amount of 30°. As a result, the drive elements of the motor drive circuit 12 may be thermally broken, and therefore the current is limited by the current limiter 1207. For example, the maximum current value or the time for continuous conduction in a specified phase is limited. Thus, an unduly large current is prevented from flowing and a further trouble is suppressed.

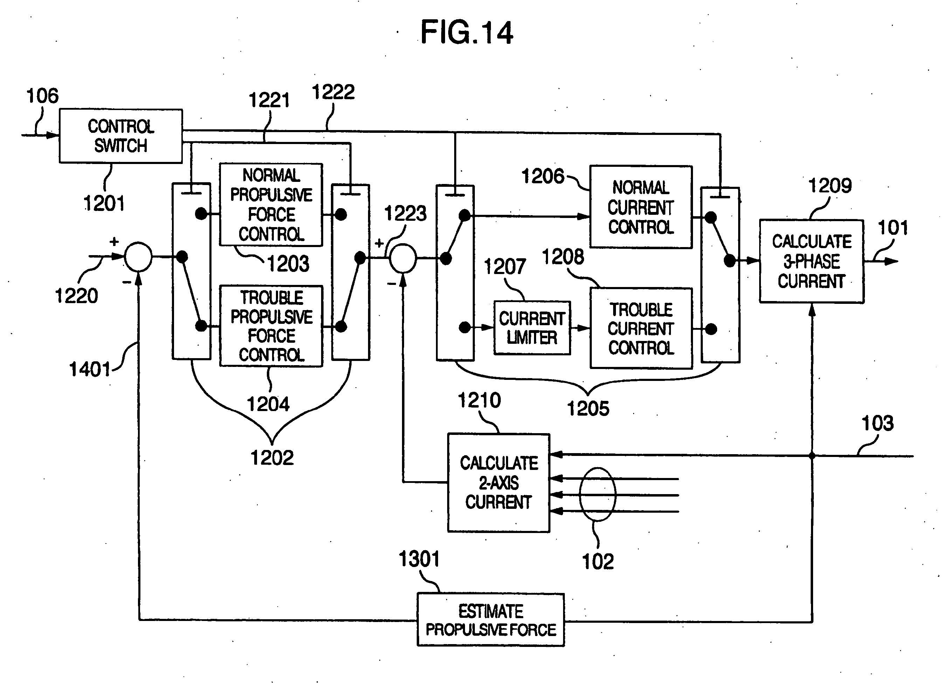

Fig. 14 shows a configuration for control operation at the time of occurrence of a trouble in the propulsive force sensor shown in Fig. 11.

Upon detection of a trouble in the propulsive force sensor, the control operation is performed using an estimated propulsive force signal 1401 estimating the propulsive force signal 104 by the propulsive force estimation process 1301 from the rotation angle signal 103 constituting the rotation amount of the motor 16.

Also, the propulsive force control switch 1202 is switched by the control switch 1201, so that the propulsive force controller is used as a trouble propulsive force controller 1204.

As an alternative, the operation is switched to the position for controlling the rotation angle signal 103 constituting the rotation amount of the motor 16 based on the propulsive force control to control the propulsive force signal 104 representing the propulsive force of the braking member 19.

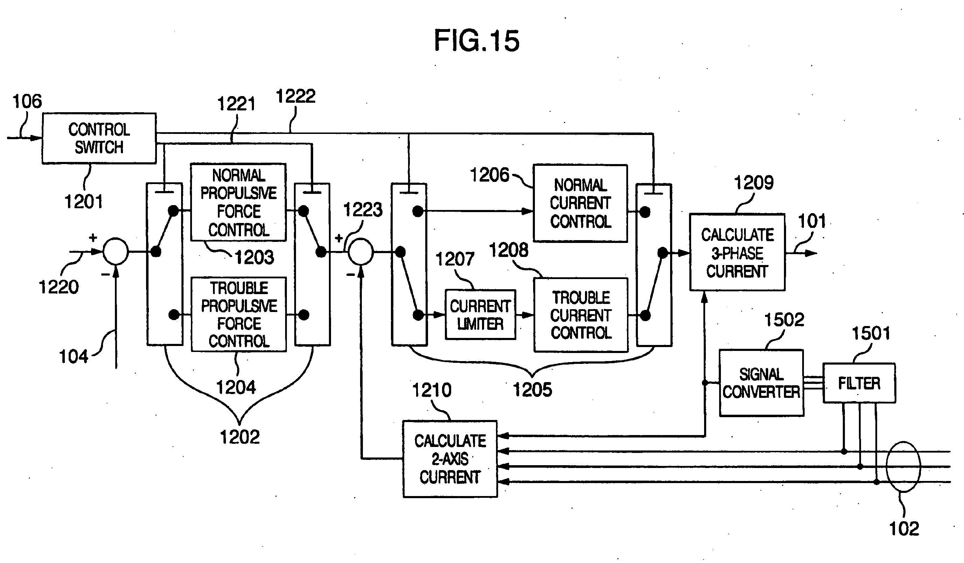

Fig. 15 shows a configuration for the control operation performed upon occurrence of a trouble in the rotation angle sensor shown in Fig. 11.

In the case where a trouble occurs in the rotation angle sensor, the operation is switched to the sensorless control in which the rotation angle signal 103 is estimated from the motor current signal 102. The rotation angle signal 103 is estimated from the motor current signal 102 using the filter 1501 and the signal converter 1502. Also, the current control switch 1205 is turned by the control switch 1201 to use the trouble current controller 1208 as a current controller.

As described above, assume that an obstacle exists ahead or the friction coefficient with the road surface is small, during a trouble of the electric brake system, as determined from the output of the trouble detector for detecting a trouble of the electric brake system and the output of the environmental information detection unit for acquiring the environmental information for determining the vehicle running condition. A replacement control system for generating a braking force is selected. Upon determination that no obstacle exists ahead or the friction coefficient with the road surface is large, on the other hand, a control system generating no braking force is selected to continue or stop the control operation.

Also, at the time of a trouble of the electric brake system, it is determined whether the driver has performed the brake operation or not based on the output of the trouble detection unit for detecting the trouble of the electric brake system and the output of the brake pedal angle detection unit for detecting the brake request of the driver, and in the case where the brake operation is performed, a replacement control system for generating a braking force is selected. Otherwise, a control system generating no braking force is selected to continue or stop the control operation.

Once a trouble occurs in the component parts of the electric brake system, at least two states exist, one in which the braking force is generated for the vehicle by the electric brake system and the other in which no such braking force is generated. Thus, an electric brake system is implemented which have two modes, one in which the braking force is generated and the vehicle is decelerated upon occurrence of a trouble, and the other in which the vehicle stability is easily secured without generating the braking force, resulting in an improved safety.

One of at least the two states is selected, i.e. the state in which the vehicle braking force is generated by the electric brake system and the state in which no such braking force is generated. Also, the operation is switched from one state to the other of at least two states, i.e. the state in which the vehicle braking force is generated by the electric brake system and the state in which no such a braking force is generated. Further, two states are selected in accordance with the braking force request by the driver. As a result, an electric brake system is provided for selecting, in accordance with the braking force request of the driver upon occurrence of a trouble, a mode in which the braking force is generated and the vehicle is decelerated or a mode in which the vehicle stability is secured easily without generating the braking force, resulting in a improved safety.

The two states described above are selected in accordance with the running condition. Thus, an electric brake system is provided whereby at the time of trouble occurrence, the state in which the braking force is generated and the vehicle speed is reduced or the state in which the vehicle stability is easily secured without generating the braking force is selected in accordance with the braking force request of the driver, resulting in an improved safety feeling on the part of the driver.

Also, two states are selected in accordance with the vehicle condition. An electric brake system is provided whereby at the time of trouble occurrence, the state in which the braking force is generated and the vehicle speed is reduced or the state in which the vehicle stability is easily secured without generating the braking force is selected in accordance with the vehicle condition, resulting in an improved safety.

Further, in the case where the current sensor develops a trouble, the control system is selected in which the signal of the propulsive force sensor or the rotation angle sensor is used without using the signal of the current sensor. Also, in the case where the motor rotation angle sensor develops a trouble, the control system is selected in which the signal of the current sensor is used without using the signal of the motor rotation angle sensor. Furthermore, in the case where the propulsive force sensor develops a trouble, the control system is selected in which the signal of the motor rotation angle sensor is used without using the signal of the propulsive force sensor. The electric brake system, if a trouble occurs therein, can continue the operation thereof.

Also, an electric brake system including an alarm unit having a plurality of alarm methods for notifying the driver of a trouble is provided, in which one of the alarm methods is selected in accordance with the control method of the electric brake system. Thus, the condition of the brake control operation is notified to the driver through the alarm unit, and therefore the degree of recognizing the trouble is improved.

Further, the current supplied to the actuator is limited when the control method of the electric brake system is switched. As a result, an unduly large current is not supplied at the time of trouble occurrence in the electric brake system, thereby preventing the trouble from becoming more serious.

Although the embodiments of the invention are described above in detail, this invention is not limited to these embodiments and variously applicable without departing from the scope of claims appended hereto.

## Claims

1. An electric brake control apparatus comprising:
a detector (21) for detecting a faulty sensor among a plurality of predetermined sensors of an electric brake system;
wherein said plurality of predetermined sensors includes:
a current sensor (15) for measuring the current value of the drive circuit (12);
a rotation angle sensor (17) for detecting the rotation angle of the motor (16); and
a sensor (18) for measuring a pressing force of the braking member (19);
**characterized in that** the apparatus further comprises:
a determining unit for determining whether the braking force generating function of the electric brake system is maintained or stopped, in accordance with the type of the faulty sensor detected by the detector; and
a control unit (13) for stopping the operation of the electric brake system upon determination by the determining unit that the braking force generating function is stopped and maintaining the braking force generating function of the electric brake system using other sensors than the faulty sensor detected by the detector upon determination by the determining unit that the braking force generating function is maintained.

2. An electric brake control apparatus according to claim 1,
wherein the faulty sensor is a current sensor (15) for measuring the current value of a motor drive circuit (12) for controlling the braking force, and
wherein the current value is estimated in accordance with selected one of the output value of a
propulsive force sensor (18) for measuring the propulsive force of the brake pad driven by the motor
(16) and the output value of a rotation angle sensor
(17) of the motor (16), and the motor (16) is controlled based on the estimated current measurement.

3. An electric brake control apparatus according to claim 1 or 2,
wherein the faulty sensor is a current sensor (15) for measuring the current value of the motor drive circuit (12) for controlling the braking force, and
wherein the drive signal for the motor (16) is controlled in open loop and the drive current for the motor (16) is limited.

4. An electric brake control apparatus according to at least one of the preceding claims,
wherein the faulty sensor is a current sensor (15) for measuring the current value of the drive circuit (12) of a three-phase AC motor for controlling the braking force, and
wherein the drive signal for the motor (16) is controlled in open loop and the time for supplying the current continuously to a specified phase of the three-phase current is limited.

5. An electric brake control apparatus according to at least one of the preceding claims,
wherein the faulty sensor is a motor rotation angle sensor (17) for controlling the braking
force, and
wherein the motor (16) is controlled based on the rotation angle estimated from the measurement of the current sensor (15) arranged in the motor drive circuit (12).

6. An electric brake control apparatus according to at least one of the preceding claims,
wherein the faulty sensor is a sensor (18) for measuring a pressing force of the braking member, and
wherein the motor (16) is controlled based on the propulsive force estimated from the output value of the motor rotation angle sensor (17).

7. An electric brake control apparatus according to at least one of the preceding claims,
wherein the determining unit determines whether the braking force generating function of the electric brake system is maintained or stopped in accordance with the faulty sensor detected by the detector and the output signal of the sensor for detecting the vehicle condition.

8. An electric brake control apparatus according to claim 7,
wherein the output signal of the sensor is a brake operation signal of the driver.

9. An electric brake control apparatus according to at least one of the preceding claims,
wherein the determining unit determines whether the braking force generating function of the electric brake system is maintained or stopped in accordance with the faulty sensor detected by the detector and the result of detection of at least one of a radar, a camera, a raindrop sensor and a navigation system for detecting the situation around the vehicle.

10. An electric brake control apparatus according to claim 9,
wherein the determining unit determines that the braking force generating function of the electric brake is stopped in the case where the detection result shows the absence of an obstacle ahead of the vehicle.

11. An electric brake control apparatus according to at least one of the preceding claims,
wherein the contents of the signal output to the alarm unit for the driver are changed in accordance with the result of determination by the determining unit.

12. An electric brake control apparatus according to one of the preceding claims comprising:
a detector for detecting the occurrence of a trouble in a predetermined sensor of an electric brake system; and
an operation mode changing means for changing the operation mode of the electric brake system in accordance with the type of the faulty sensor
detected by the detector;
wherein the operation mode includes at least two modes, i.e. a braking force generation mode for controlling the electric brake system using other sensors than the faulty sensor and a braking force stop mode for stopping the operation of the electric brake system.

13. An electric brake control apparatus according to claim 12,
wherein the braking force generation mode includes at least one of a current sensor trouble mode in which the current sensor (15) for measuring the current value of the motor drive circuit (12) for controlling the braking force develops a trouble, a rotation angle sensor trouble mode in which the motor rotation angle sensor (17) develops a trouble and a propulsive force sensor trouble mode in which a sensor (18) for measuring a pressing force of the braking member develops a trouble.

14. An electric brake system comprising: an electric brake control apparatus according to claim 1;
a braking member (19);
a motor (16) for pressing the braking member (19) ;
a drive circuit (12) for controlling the motor (16);
a current sensor (15) for measuring the current value of the drive circuit (12);
a rotation angle sensor (17) for detecting
the rotation angle of the motor (16);
a sensor (18) for measuring a pressing force of the braking member (19);
a drive circuit control unit supplied with the output values of the current sensor (15), the rotation angle sensor (17) and the propulsive force sensor (18) and a brake pedal operation signal for controlling the drive circuit (12) based on the output values and the brake pedal operation signal;
the detector (21) being configured for detecting the occurrence of a trouble in at least one of the current sensor
(15), the rotation angle sensor (17) and the propulsive force sensor (18);
the determining unit being configured for determining whether the braking force generating function is maintained or stopped in accordance with the type of the faulty sensor detected by the detector; and
said control unit (13) being configured for maintaining the braking force generating function with other sensors than the faulty sensor detected by the detector in the case where the determining unit determines that the braking force generating function is maintained.

## Patentansprüche

1. Strombremsenregelvorrichtung mit:
einem Detektor (21) zum Erfassen eines defekten Sensors unter mehreren vorgegebenen Sensoren eines Strombremsensystems;
wobei die mehreren vorgegebenen Sensoren Folgendes einschließen:
einen Stromsensor (15) zum Messen des Stromwerts der Ansteuerungsschaltung (12);
einen Drehwinkelsensor (17) zum Erfassen des Drehwinkels des Motors (16), und
einen Sensor (18) zum Messen einer Presskraft des Bremselements (19);
**dadurch gekennzeichnet, dass** die Vorrichtung weiterhin Folgendes umfasst:
eine Bestimmungseinheit zum Bestimmen nach Maßgabe des Typs des von dem Detektor erfassten defekten Sensors, ob die Bremskraft-Erzeugungsfunktion des Strombremsensystems aufrechterhalten wird oder gestoppt ist; und
eine Steuerungseinheit (13) zum Stoppen des Betriebs des Strombremsensystems bei Bestimmung durch die Bestimmungseinheit, dass die Bremskraft-Erzeugungsfunktion gestoppt ist, und zum Aufrechterhalten der Bremskraft-Erzeugungsfunktion des Strombremsensystems unter Verwendung anderer Sensoren als dem von dem Detektor erfassten defekten Sensor bei Bestimmung durch die Bestimmungseinheit, dass die Bremskraft-Erzeugungsfunktion aufrechterhalten wird.

2. Strombremsenregelvorrichtung nach Anspruch 1,
wobei der defekte Sensor ein Stromsensor (15) zum Messen des Stromwerts einer Motoransteuerungsschaltung (12) zum Regeln der Bremskraft ist, und
wobei der Stromwert nach Maßgabe eines ausgewählten von dem Ausgangswert eines Antriebskraftsensors (18) zum Messen der Antriebskraft des von dem Motor (16) angetriebenen Bremsbelags oder dem Ausgangswert eines Drehwinkelsensors (17) des Motors (16) geschätzt und der Motor (16) auf der Grundlage der Schätzstrommessung geregelt wird.

3. Strombremsenregelvorrichtung nach Anspruch 1 oder 2,
wobei der defekte Sensor ein Stromsensor (15) zum Messen des Stromwerts der Motoransteuerungsschaltung (12) zum Regeln der Bremskraft ist, und
wobei das Ansteuerungssignal für den Motor (16) im offenen Regelkreis geregelt wird und der Ansteuerungsstrom für den Motor (16) begrenzt ist.

4. Strombremsenregelvorrichtung nach mindestens einem der vorhergehenden Ansprüche,
wobei der defekte Sensor ein Stromsensor (15) zum Messen des Stromwerts der Ansteuerungsschaltung (12) eines Drehstrommotors zum Regeln der Bremskraft ist, und
wobei das Ansteuerungssignal für den Motor (16) im offenen Regelkreis geregelt wird und die Zeit zum kontinuierlichen Zuführen des Stroms zu einer spezifizierten Phase des Drehstroms begrenzt ist.

5. Strombremsenregelvorrichtung nach mindestens einem der vorhergehenden Ansprüche,
wobei der defekte Sensor ein Motordrehwinkelsensor (17) zum Regeln der Bremskraft ist, und
wobei der Motor (16) auf der Grundlage des Drehwinkels geregelt wird, der aus der Messung des in der Motoransteuerungsschaltung (12) angeordneten Stromsensors (15) geschätzt wird.

6. Strombremsenregelvorrichtung nach mindestens einem der vorhergehenden Ansprüche,
wobei der defekte Sensor ein Sensor (18) zum Messen einer Presskraft des Bremselements ist, und
wobei der Motor (16) auf der Grundlage der Antriebskraft geregelt wird, die aus dem Ausgangswert des Motordrehwinkelsensors (17) geschätzt wird.

7. Strombremsenregelvorrichtung nach mindestens einem der vorhergehenden Ansprüche,
wobei die Bestimmungseinheit nach Maßgabe des von dem Detektor erfassten defekten Sensors und des Ausgangssignals des Sensors zum Erfassen des Fahrzeugzustands bestimmt, ob die Bremskraft-Erzeugungsfunktion des Strombremsensystems aufrechterhalten wird oder gestoppt ist.

8. Strombremsenregelvorrichtung nach Anspruch 7,
wobei das Ausgangssignal des Sensors ein Bremsbetriebssignal des Fahrers ist.

9. Strombremsenregelvorrichtung nach mindestens einem der vorhergehenden Ansprüche,
wobei die Bestimmungseinheit nach Maßgabe des von dem Detektor erfassten defekten Sensors und des Ergebnisses der Erfassung von zumindest einem oder einer von einem Radar, einer Kamera, einem Regentropfensensor und einem Navigationssystem zum Erfassen der Situation rund um das Fahrzeug bestimmt, ob die Bremskraft-Erzeugungsfunktion des Strombremsensystems aufrechterhalten wird oder gestoppt ist.

10. Strombremsenregelvorrichtung nach Anspruch 9,
wobei die Bestimmungseinheit bestimmt, dass die Bremskraft-Erzeugungsfunktion der Strombremse in dem Fall gestoppt ist, in dem das Erfassungsergebnis das Fehlen eines Hindernisses vor dem Fahrzeug zeigt.

11. Strombremsenregelvorrichtung nach mindestens einem der vorhergehenden Ansprüche,
wobei die Inhalte des Signalausgangs an die Alarmeinheit für den Fahrer nach Maßgabe des Ergebnisses der Bestimmung durch die Bestimmungseinheit geändert werden.

12. Strombremsenregelvorrichtung nach einem der vorhergehenden Ansprüche, mit:
einem Detektor zum Erfassen des Auftretens einer Störung in einem vorgegebenen Sensor eines Strombremsensystems; und
einer Betriebsmodus-Änderungseinrichtung zum Ändern des Betriebsmodus des Strombremsensystems nach Maßgabe des Typs des von dem Detektor erfassten defekten Sensors;
wobei der Betriebsmodus mindestens zwei Modi einschließt, d. h. einen Bremskraft-Erzeugungsmodus zum Regeln des Strombremsensystems unter Verwendung anderer Sensoren als dem defekten Sensor und einen Bremskraft-Stoppmodus zum Stoppen des Betriebs des Strombremsensystems.

13. Strombremsenregelvorrichtung nach Anspruch 12,
wobei der Bremskraft-Erzeugungsmodus mindestens einen von einem Stromsensor-Störungsmodus, in dem bei dem Stromsensor (15) zum Messen des Stromwerts der Motoransteuerungsschaltung (12) zum Regeln der Bremskraft eine Störung entsteht, einem Drehwinkelsensor-Störungsmodus, in dem bei dem Motordrehwinkelsensor (17) eine Störung entsteht, und einem Antriebskraftsensor-Störungsmodus, in dem bei einem Sensor (18) zum Messen einer Presskraft des Bremselements eine Störung entsteht, umfasst.

14. Strombremsensystem mit: einer Strombremsenregelvorrichtung nach Anspruch 1;
einem Bremselement (19);
einem Motor (16) zum Drücken auf das Bremselement (19);
einer Ansteuerungsschaltung (12) zum Steuern des Motors (16);
einem Stromsensor (15) zum Messen des Stromwerts der Ansteuerungsschaltung (12);
einem Drehwinkelsensor (17) zum Erfassen des Drehwinkels des Motors (16);
einem Sensor (18) zum Messen einer Presskraft des Bremselements (19);
einer Antriebssteuerungs-Steuereinheit, der die Ausgangswerte des Stromsensors (15), des Drehwinkelsensors (17) und des Antriebskraftsensors (18) und ein Bremspedal-Betätigungssignal zum Steuern der Ansteuerungsschaltung (12) auf der Grundlage der Ausgangswerte und des Bremspedal-Betätigungssignals zugeführt werden;
wobei der Detektor (21) zum Erfassen des Auftretens einer Störung in zumindest einem von dem Stromsensor (15), dem Drehwinkelsensor (17) und dem Antriebskraftsensor (18) konfiguriert ist;
wobei die Bestimmungseinheit nach Maßgabe des Typs des von dem Detektor erfassten defekten Sensors zum Bestimmen, ob die Bremskraft-Erzeugungsfunktion aufrechterhalten wird oder gestoppt ist, konfiguriert ist; und
wobei die Steuerungseinheit (13) zum Aufrechterhalten der Bremskraft-Erzeugungsfunktion mit anderen Sensoren als dem von dem Detektor erfassten defekten Sensor in dem Fall, in dem die Bestimmungseinheit bestimmt, dass die Bremskraft-Erzeugungsfunktion aufrechterhalten wird, konfiguriert ist.

## Revendications

1. Dispositif de contrôle de frein électrique comprenant :
un détecteur (21) permettant de détecter un capteur défectueux parmi une pluralité de capteurs prédéterminés d'un système de frein électrique ;
dans lequel ladite pluralité de capteurs prédéterminés inclut :
un capteur de courant (15) permettant de mesurer la valeur de courant du circuit de commande (12) ;
un capteur d'angle de rotation (17) permettant de détecter l'angle de rotation du moteur (16) ; et
un capteur (18) permettant de mesurer la force de pression de l'élément de freinage (19),
**caractérisé en ce que** le dispositif comprenant en outre:
une unité de détermination permettant de déterminer si la fonction de génération de force de freinage du système de frein électrique est maintenue ou stoppée, selon le type de capteur défectueux détecté par le détecteur ; et
une unité de contrôle (13) permettant de stopper le système de frein électrique lorsque l'unité de détermination détermine que la fonction de génération de force de freinage est stoppée et
permettant de maintenir la fonction de génération de force de freinage du système de frein électrique en utilisant d'autres capteurs que le capteur défectueux détecté par le détecteur lorsque l'unité de détermination détermine que la fonction de génération de force de freinage est maintenue.

2. Dispositif de contrôle de frein électrique selon la revendication 1,
dans lequel le capteur défectueux est un capteur de courant (15) permettant de mesurer la valeur de courant d'un circuit de commande de moteur (12) destiné à contrôler la force de freinage, et
dans lequel la valeur de courant est évaluée conformément à une valeur sélectionnée parmi la valeur de sortie d'un capteur de force de propulsion (18) permettant de mesurer la force de propulsion de la plaquette de frein commandée par le moteur (16) et la valeur de sortie d'un capteur d'angle de rotation (17) du moteur (16) et le moteur (16) est contrôlé en fonction de la mesure de courant estimée.

3. Dispositif de contrôle de frein électrique selon la revendication 1 ou 2,
dans lequel le capteur défectueux est un capteur de courant (15) permettant de mesurer la valeur de courant du circuit de commande de moteur (12) destiné à contrôler la force de freinage, et
dans lequel le signal de commande pour le moteur (16) est contrôlé en boucle ouverte et le courant de commande pour le moteur (16) est limité.

4. Dispositif de contrôle de frein électrique selon au moins l'une des revendications précédentes,
dans lequel le capteur défectueux est un capteur de courant (15) permettant de mesurer la valeur de courant du circuit de commande (12) d'un moteur à courant alternatif triphasé destiné à contrôler la force de freinage, et
dans lequel le signal de commande pour le moteur (16) est contrôlé en boucle ouverte et le temps pour fournir le courant de manière continue à une phase spécifiée du courant triphasé est limité.

5. Dispositif de contrôle de frein électrique selon au moins l'une des revendications précédentes,
dans lequel le capteur défectueux est un capteur d'angle de rotation de moteur (17) permettant de contrôler la force de freinage, et
dans lequel le moteur (16) est contrôlé en fonction de l'angle de rotation estimé à partir de la mesure du capteur de courant (15) disposé dans le circuit de commande de moteur (12).

6. Dispositif de contrôle de frein électrique selon au moins l'une des revendications précédentes,
dans lequel le capteur défectueux est un capteur (18) permettant de mesurer une force de pression de l'élément de freinage, et
dans lequel le moteur (16) est contrôlé en fonction de la force de propulsion estimée à partir de la valeur de sortie du capteur d'angle de rotation de moteur (17).

7. Dispositif de contrôle de frein électrique selon au moins l'une des revendications précédentes,
dans lequel l'unité de détermination détermine si la fonction de génération de force de freinage du système de frein électrique est maintenue ou stoppée selon le capteur défectueux détecté par le détecteur et le signal de sortie du capteur permettant de détecter l'état du véhicule.

8. Dispositif de contrôle de frein électrique selon la revendication 7,
dans lequel le signal de sortie du capteur est un signal de commande de frein du circuit de commande.

9. Dispositif de contrôle de frein électrique selon au moins l'une des revendications précédentes,
dans lequel l'unité de détermination détermine si la fonction de génération de force de freinage du système de frein électrique est maintenue ou stoppée selon le capteur défectueux détecté par le détecteur et le résultat de détection d'au moins un dispositif parmi un radar, une caméra, un capteur de pluie ou un système de navigation permettant de détecter la situation autour du véhicule.

10. Dispositif de contrôle de frein électrique selon la revendication 9,
dans lequel l'unité de détermination détermine que la fonction de génération de force de freinage du frein électrique est stoppée dans le cas où le résultat de détection montre l'absence d'un obstacle à l'avant du véhicule.

11. Dispositif de contrôle de frein électrique selon au moins l'une des revendications précédentes,
dans lequel le contenu du signal transmis à l'unité d'alarme pour le circuit de commande est changé selon le résultat de la détermination effectuée par l'unité de détermination.

12. Dispositif de contrôle de frein électrique selon l'une des revendications précédentes comprenant :
un détecteur permettant de détecter l'apparition d'une panne dans un capteur prédéterminé d'un système de frein électrique ; et
un moyen de changement du mode de fonctionnement permettant de changer le mode de fonctionnement du système de frein électrique selon le type de capteur défectueux détecté par le détecteur ;
dans lequel le mode de fonctionnement inclut au moins deux modes, c'est-à-dire un mode de génération de force de freinage permettant de contrôler le système de frein électrique en utilisant d'autres capteurs que le capteur défectueux et un mode d'arrêt de force de freinage permettant d'arrêter le système de frein électrique.

13. Dispositif de contrôle de frein électrique selon la revendication 12, dans lequel le mode de génération de force de freinage inclut au moins l'un des modes parmi le mode de panne de capteur de courant dans lequel le capteur de courant (15) permettant de mesurer la valeur de courant du circuit de commande de moteur (12) permettant de contrôler la force de freinage connaît une panne, un mode de panne de capteur d'angle de rotation dans lequel le capteur d'angle de rotation de moteur (17) connaît une panne ou un mode de panne de capteur de force de propulsion dans lequel un capteur (18) permettant de mesurer une force de pression de l'élément de freinage connaît une panne.

14. Système de frein électrique comprenant un dispositif de contrôle de frein électrique selon la revendication 1 :
un élément de freinage (19) ;
un moteur (16) permettant d'appuyer sur l'élément de freinage (19) ;
un circuit de commande (12) permettant de contrôler le moteur (16) ;
un capteur de courant (15) permettant de mesurer la valeur de courant du circuit de commande (12) ;
un capteur d'angle de rotation (17) permettant de détecter l'angle de rotation du moteur (16) ;
un capteur (18) permettant de mesurer une force de pression de l' élément de freinage (19) ;
une unité de contrôle du circuit de commande à laquelle sont fournies les valeurs de sortie du capteur de courant (15), du capteur d'angle de rotation (17) et du capteur de force de propulsion (18) et un signal de commande de pédale de freinage destiné à contrôler le circuit de commande (12) en fonction des valeurs de sortie et du signal de commande de pédale de freinage ;
le détecteur (21) étant configuré pour détecter l'apparition d'une panne dans au moins l'un des capteurs parmi le capteur de courant (15), le capteur d'angle de rotation (17) ou le capteur de force de propulsion (18) ;
l'unité de détermination étant configurée pour déterminer si la fonction de génération de force de freinage est maintenue ou stoppée selon le type de capteur défectueux détecté par le détecteur ; et
ladite unité de contrôle (13) étant configurée pour maintenir la fonction de génération de force de freinage avec d'autres capteurs que le capteur défectueux détecté par le détecteur dans le cas où l'unité de détermination détermine que la fonction de génération de force de freinage est maintenue.
